# EUROPEAN PATENT APPLICATION

(11) **EP 2 503 553 A1**
(43) Date of publication of application: **26.09.2012**
(21) Application number: 12166265.4
(22) Date of filing: 03.06.2008
(51) Int. Cl.: G11B 27/10, G11B 27/34, H04N 21/433, H04N 21/439

(54) **Intelligent music track selection in a networked environment**

(30) Priority: 06.07.2007 US 774110
(62) Divisional of application: 08756651.9
(71) Applicant: Bose Corporation, Framingham, MA 01701-9168 (US)
(72) Inventor: Martin, Keith, Hopedale, MA Massachusetts 01747 (US); Sakalowski, John Michael, West Newton, MA Massachusetts 02465 (US)
(74) Representative: Attali, Pascal

(57) **Abstract**

An indication is provided of a state of a body of content, the body of content including at least a portion of a track, the indication being updated based on a user's interaction with the content, the state of the body of content including information about the user's preferences with respect to the body of content. In the endpoint playback device, tracks of the body of content, received across a network from a server, are cached each an amount of track which depends on the likelihood of a user choosing that track to be the next track to be played.

## Description

### BACKGROUND

This description relates to selection of items based on user reactions. Some of the examples described here relate to descriptions set forth in U.S. Patent Application Publication Nos. 2003-0236582-A1 (filed June 25, 2002), 2004-0225519-A1 (filed December 24, 2003), 2005-0146444-A1 (filed January 6, 2004), and 2005-0021470-A1 (filed June 8, 2004). The contents of these publications (collectively referred to as the "incorporated patent publications"), including definitions of terms, are incorporated by reference here.

### SUMMARY

In general, in one aspect, a indication is provided of a state of a body of content, the body of content including at least a portion of a track, the indication being updated based on a user's interaction with the content, the state of the body of content comprising information about the user's preferences with respect to the body of content.

Implementations may include one or more of the following features. The state of the body of content includes the freshness of the body of content. The state of the body of content includes information about how recently portions of the body of content have been played. The state of the body of content includes information about how much of the body of content has been played. The state of the body of content includes information about an extent to which portions of the body of content match preferences of the user. The state of the body of content includes information about the extent to which portions of the body of content have not been played by the user. The method further includes retrieving the content from a library, the library including at least one reference to a track stored locally and at least one reference to a track stored remotely. The reference to the track stored remotely includes an address from which a computer program can stream the track. The indication includes a graphical representation. The graphical representation depicts a fuel gauge. The graphical representation depicts a fruit.

In general, in another aspect, a method is provided including enabling a user using a user interface device to select an arbitrary cell located in a grid of cells, the grid having a first dimension and a second dimension, the selection of a cell representing a request to be applied to a track associated with the selected cell, each cell in the grid having an attribute with a value, the cells located along a line of cells in the first dimension having the same value for the attribute, and the cells located along a line of cells in the second dimension having a different value for the attribute.

Implementations may include one or more of the following features. The attribute is chosen from the group consisting of genre, date, theme, mood, album, artist, and an extent to which a user likes a track. The method further includes deriving the attribute from metadata associated with a track. Each line of cells in the first dimension represents a station. The method further includes retrieving content from a library, the library including at least one reference to a track stored locally and at least one reference to a track stored remotely. The reference to the track stored remotely comprises an address from which a computer program can stream the track.

In general, in another aspect, a method is provided including, based on the content of a log file on a device, creating a user profile without, at the time of the creation of the user profile, requesting user interaction, the log file reflecting user reactions to tracks.

Implementations may include the method in which the device is selected from the group consisting of a computer, a portable playback device, and a digital video recorder.

In general, in another aspect, the invention features a computer-readable medium having instructions encoded thereon for executing any of the methods described above.

These and other features and aspects, and combinations of them, may be expressed as methods, program products, combinations, systems, apparatus, as means for performing functions, and in other ways.

Other features will be apparent from the description and the claims.

### BRIEF DESCRIPTION OF THE DRAWINGS

FIGS. 1, 3 through 5, and 7 through 9 are block diagrams.
FIGS. 2 and 6 are flowcharts.

### DETAILED DESCRIPTION

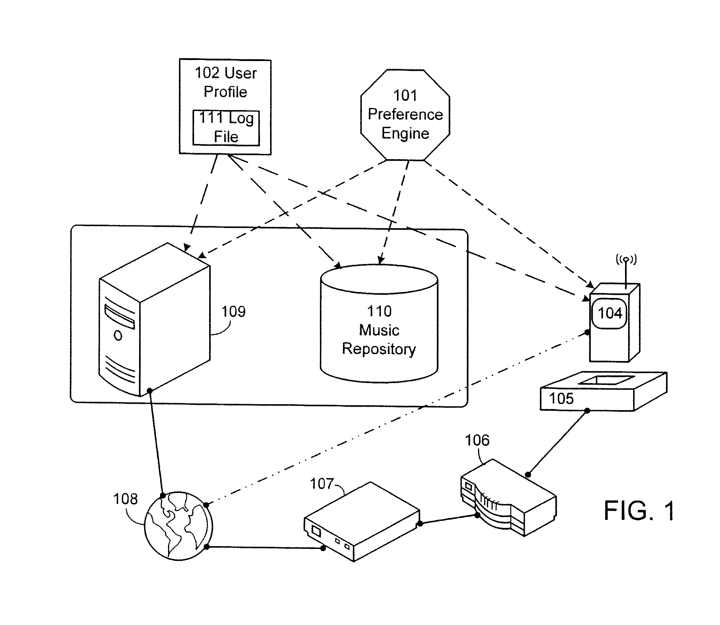

Referring to FIG. 1, an example music playback system includes a playback device 104, a preference engine 101 (for example, as described in the incorporated patent publications), and a user profile 102 which stores a user's music preferences. In some examples, the preference engine 101 is located at a central server 109. In some examples, the preference engine 101 is located in a music repository 110 or an end-point playback device 104. In some examples, multiple preference engines are located in different locations and share information with each other.

In some examples, the user profile 102 is stored at the central server 109; in some examples, the user profile 102 is stored in the music repository 110 or the playback device 104. In some examples, the central server 109 is integrated in one physical component with the music repository 110. Other possible combinations of elements and their locations exist.

In some examples, the end-point playback device 104 can be inserted into a network enabled dock station 105. A router 106 connects to the dock station 105, and, in the depicted example, a cable modem 107 connects the router 106 to the internet 108. In some examples, the end-point playback device 104 includes wireless network capabilities such as Wi-Fi or Bluetooth; or the device is incorporated into a cellular telephone which connects to the internet all the time. In some examples, the device 104 connects to the network via dial up or through a wired connection with a computer. Other options, including combinations of these, are possible. In some examples, data sent over the network connection is encrypted using public key encryption and/or using symmetric encryption, for example, using the secure sockets layer (SSL) protocol.

The example depicted in FIG. 1 includes a central server 109 to which the end-point playback device 104 can connect across the internet 108. The depicted example also includes a music repository 110 for providing a library of tracks. Examples of tracks include songs stored on a compact disc; audio or video data stored on a local computer; audio or video data streamed from a remote server; audio or video data stored on a remote server and transferred to the local server, and audio or video data stored on a portable or automotive device. In some examples, the music repository 110 is a subscription-based music service, such as Rhapsody (http://www.rhapsody.com). In some examples, the repository 110 is a user's personal music collection stored on a hard drive-based product, such as a Bose Lifestyle system. In some examples, the repository is a combination of a user's personal collection with music available on a subscription-based music service and/or a pay-per-song-based music service such as Apple's iTunes Music Store (http://phobos.apple.com/WebObjects/MZStore.woa/wa/storefront).

In some examples, the end-point playback device 104 is a portable device with music playback functionality, such as an MP3 player. In other examples, the playback device 104 is not portable. In some examples, the playback device 104 has local storage for storing a log file containing a user's feedback responses to tracks previously played on the playback device 104. Feedback responses include responses given by the user hitting the forward, repeat, and skip buttons or the + or - button. Some feedback is implicit, while other feedback is explicit. In some examples, the playback device 104 has a user interface to facilitate playback of the music tracks. The playback device 104 may also possess a processing capability such as a CPU. In some examples, the playback device 104 is a Bose Wave PC system or a Bose Lifestyle system.

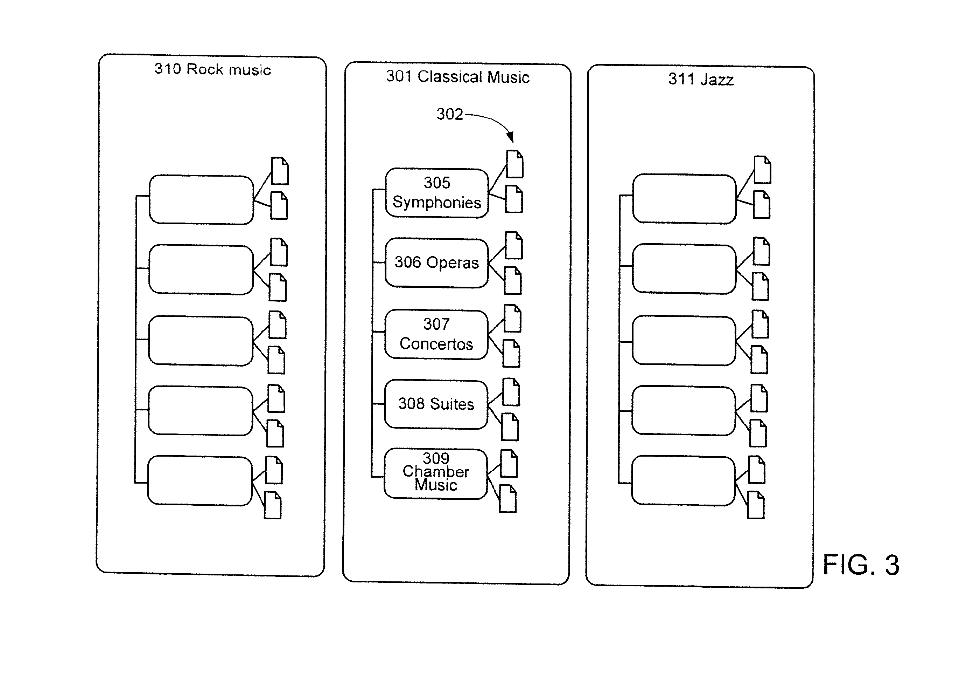

In some examples, tracks on the music repository are organized into a set of stations 301, 310, 311. An example of this form of organization is depicted more fully in FIG. 3. In the depicted example, a given station 301 corresponds to a particular genre of music, classical music. Within the station, tracks 302 are further organized by subgenre, such as symphonies 305, operas 306, concertos 307, suites 308, and chamber music 309. In other examples, tracks are organized by theme, mood, or other taxonomies. In some examples, these taxonomies are derived from metadata derived from a publicly available database such as Gracenote's CDDB database.

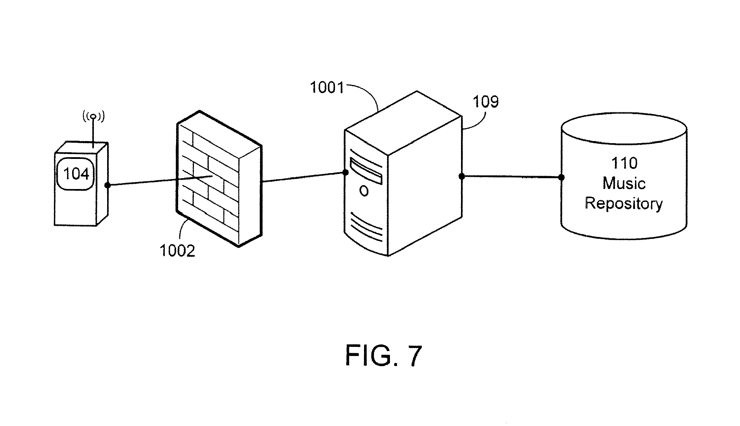

In examples in which the music repository 110 includes music from a user's personal collection, a system may permit the user's music collection to be served to the user outside of his or her home, so long as the user has access to an internet connection. As shown in FIG. 7, in some implementations, the central server 109 functions as a reflector server 1001. The reflector server 1001 acts as a focal point to facilitate communication between the playback device 104 and the music repository 110. These implementations are useful, for example, if the playback device 104 is located behind a firewall 1002 or Network Address Translation (NAT) router. The device 104 connects to the reflector server 1001, which is located outside the firewall 1002. The reflector server then communicates on the device's behalf with the music repository 110.

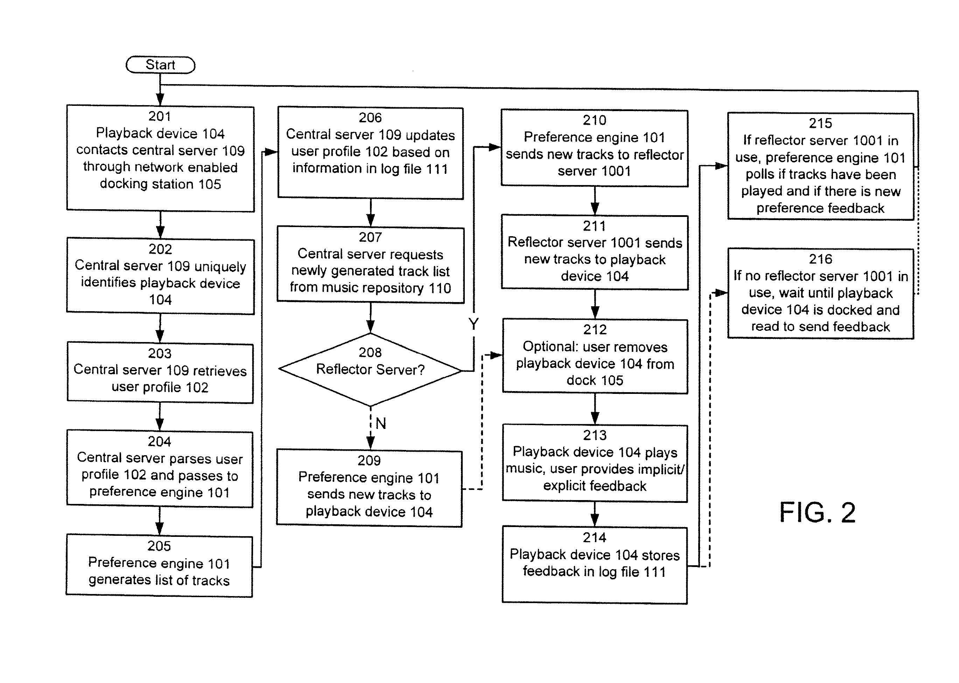

The process by which the playback device 104 communicates with the repository 110 is exemplified in more detail with reference to FIG. 2. In the depicted example, the end-point playback device 104 contacts the central server 109 through the network enabled dock station 105 (step 201). In some examples, as explained above, the connection is to a reflector server 1001. In some examples, the reflector server 1001 is running on the central server 109; in other examples, it is a separate entity that acts as a proxy, forwarding requests from the device 104 to the central server 109, and forwarding back responses. By keeping the reflector server separate, sensitive information such as preference information can be kept behind a firewall. The central server 109 uniquely identifies the end-point playback device 104 (step 202) and retrieves its user profile 102 (step 203). Various authentication means such as password can be utilized to associate one or more devices with a user. A user profile stored in a central server 109 can be downloaded to a device after authentication. The same device can also be used by multiple users. The user profile 102 may include a copy of log file 111 which can be, in some examples, uploaded from the playback device 104 and contains a user's feedback responses to tracks previously played on the playback device 104. The central server 109 parses the profile 102 and passes the information to a preference engine 101 (step 204).

The preference engine 101 generates a list of tracks (step 205). An example of the algorithm by which the list is generated is explained in U.S. Patent Application Publication Nos. 2003-0236582-A1 (filed June 25, 2002). The central server 109 updates the user profile 102 using information from the log file 111 (step 206), and requests the newly-generated list of tracks from the music repository 110 (step 207). If no reflector server 1001 is in use (step 208), the central server 109 sends the new tracks to the playback device 104 (step 209). Otherwise, the central server 109 sends the new tracks to the reflector server (step 210), which sends them to the playback device 104 (step 211).

When the process is completed, the user may optionally remove the device from the dock (step 212). The device 104 plays the music, and the user provides implicit (forward, repeat, skip etc) and/or explicit (press +/- buttons) feedback (step 213). The device 104 stores the user feedback in a log file which, in some examples, resides on the playback device 104 (step 214).

If a reflector server 110 is in use, the preference engine 101 begins to poll to see if the playback device 104 is connected and if yes, upload the log file to the central server 109 to see if any of the tracks have been played and whether there is any new preference feedback (step 215). If there is feedback, control passes to step 201. If no reflector server 110 is in use, the system waits until the player is again docked (if it was undocked) and ready to send feedback (step 216), at which point control returns to step 201.

In the example described above, the device 104 is periodically synchronized with the server 109. In other examples, for example, when the device 104 is a cell phone with music playback capability, the device 104 may be continuously connected to the internet 108. In some of these examples, no log file 111 is needed. Instead, after step 211, the device 104 plays tracks and reports user feedback directly to the central server 109 or reflector server 1001. Control then returns to step 205.

In some implementations, the device 104 is periodically synchronized with a home computer. The home computer maintains a constant network connection, and pre-downloads content such as the music track list based on the user profile 102, for quicker synchronization when the device 104 is reconnected. The central server 109 continuously works in the background based on a user's music preferences from the user profile, and sends new tracks to the computer whether or not the portable device is connected. The central server 109 performs this every time when new feedback is provided or when a threshold amount of feedback information has been exceeded or in other desirable manner. When the portable device 104 is not connected, new tracks will be downloaded onto the home computer waiting for the portable device to be docked in. When the portable device is connected, the tracks on the device will be updated based on pre-downloaded new tracks. In some examples, new tracks are continuously loaded to the home computer to create a larger track pool which may be more than what can fit onto a playback device 104. The preference engine, which can either reside on the central server 109 or on the home computer, will generate new tracks from the larger track pool to download to the playback device 104. The large pool can then be further updated from the central server 109.

Some of these described implementations are advantageous in their ability to store and manage a user profile 102 in a central location (e.g., on the central server 109). Some implementations allow the profile 102, which in some examples is located in a central location such as the on the central server 109, to be updated with feedback from multiple endpoint devices when the user profile is uniquely associated with the multiple devices. Furthermore, some implementations allow the profile to be easily downloaded to a new endpoint device, for examples, when a user purchases a new device or when a shared device is used by a specific user.

### Pre-speeding

In some implementations, a "pre-seeding" phase is included in which a set of representative/seed music tracks organized into stations are pre-selected and ready to be downloaded to the user to accelerate the rate at which the stations adapt to the user's tastes. In this example, the first time the device 104 contacts the central server 109 (step 201), after the server 109 identifies the device 104 (step 202), the server selects and transmits a predetermined number of seed music tracks for each station to the end-point playback device 104. In essence, pre-seeding tracks corresponds to an initial user profile template which can be adapted to a user's taste based on a user's feedback and interaction with the tracks.

In some implementations, the spectrum of this seed music tracks cover a wide breadth of musical tastes thereby quickly allowing a user to identify stations that embody the types of music that are most familiar or interesting to him or her. The seed music tracks contained within each station are selected to be representative of the station genre on the whole. In some implementations, seed music tracks belong to a sub-genre and are representative of the potential sub-genre path within the station.

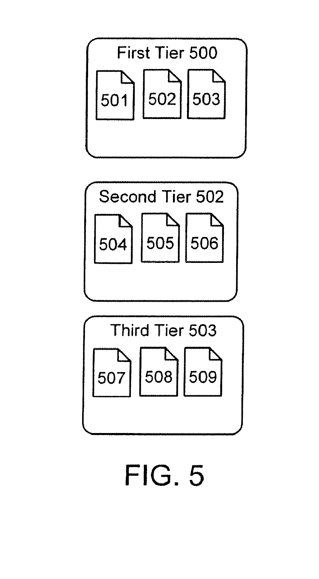

In some implementations, as depicted in FIG. 5, the seed music tracks are organized in tiers or hierarchy, as follows:

The first tier 500 contains seed tracks 501, 502, 503 transmitted during a first connection. These are the likely best candidates to fit a substantial set of customer preferences across the tastes contained in the genre. The first tier offers the broadest range of tracks allowing a user to find a suitable artist and track. With reference to FIGS. 3 and 5, in some examples, the tracks 501, 502, 503 in the first tier are drawn from within each station 301, 310, 311 and from within each subgenre 305, 306, 307, 308, 309 within a given station 301. In some examples, more tracks in the first tier belong to a specific subgenre (for example, the symphony subgenre 305) because most users prefer that subgenre (e.g., symphonies are known to be more popular than operas).

Second tier 502: seed tracks 504, 505, 506, are transmitted after a first set of user feedback is transmitted to the server. The tracks in the second tier represent a set of more narrowly defined tracks based on the user preferences. For example, the preference engine 101 learns that the user in fact prefers tracks from the opera subgenre 306 and includes more operas in the next set of seed tracks transmitted to the device 104.

Third tier 503: seed tracks 507, 508, 509, are transmitted after a second set of user feedback is transmitted to the server. The tracks in the third tier represent a further refined set of narrowly defined tracks based on the user preferences.

Additional tiers further refine the selection of tracks.

In some examples, the multi-tiered approach allows the preference engine 101 to receive a constrained data set on which to perform its calculations, increasing both the speed at which a calculation can be performed and success in picking the next track(s). In some implementations, a multi-tiered approach as described above allows the preference engine 101 quickly to discern and target a listener's tastes, thereby reducing the amount of effort required by the listener to tune the system and improving the perceived responsiveness of the system. In some implementations, this approach permits a listener to initially hear tracks in a broad context, allowing the listener to better judge the suitability and fit of the track to their preferences.

In some implementations, the seed music tracks for each of the tiers described above are obtained using collaborative filtering. In these examples, the central server 109 uses multiple users' behaviors to make seed music tracks selections for individual users. In essence, the system comes up with an initial user profile based on similar user's profiles. In some examples, the preferences engine 101 compiles information about users in a constrained geographic area and uses the compiled information when selecting seed tracks. In some examples, the preferences engine 101 learns that users in a particular geographical region prefer country music, and includes more country music songs in the first tier sent to playback devices 104 owned by users in that geographic region.

In some implementations, a user is queried about a range of personal information which may or may not be directly related to the user's musical tastes. This information is incorporated into the pre-seeding process by determining an initial user profile based on the range of user personal information. In some examples, the system requests the user's date of birth and pre-seeds tracks dating from the user's formative years. In some examples, the system asks the user where he or she was raised and pre-seeds tracks appealing in that geographic area (e.g., country music for users from the southern United States). In some examples, information about a user's musical tastes is collected using a user interface running on a personal computer, or on the endpoint device 104, that presents the user with a series of album covers and asks the user which albums are preferred. In some implementations, the user is presented only with albums for which a relatively large amount of metadata is available, or for albums that contain more references to other tracks. Other information includes a user's birthplace, preferred radio stations, TV channels, movies, sound tracks and magazines.

In some examples, this information is collected without the user's direct involvement. For example, in some implementations in which a device 104 connects through, or runs on, a home computer, the user's hard drive is scanned and data is extracted to determine a user profile. In some examples, a user's TiVo log is scanned to determine a user profile. In some implementations, the user's locale is determined by examining his or her credit card billing address. In some implementations, information about the customer is supplied by the retailer from whom the device 104 was purchased.

In some implementations, a user is enabled to bring a portable music player to a computer housed at a retailer which can run or can connect to the central server 109 to run the preference engine 101. The computer would scan the player and determine an initial user profile 102 that would be transmitted to the device 104 described above. In some implementations, a user can have a portable music player or a home computer hard drive or a TiVo log scanned over the internet by a server, which would then provide the device 104 with a default profile 102 based on the user's music preferences.

### Richer user feedback:

In some examples, a user provides a wide range of feedback using a limited number of user interface elements. In these examples, user feedback may be represented by multiple or a continuous value having any possible value that falls into interval [-1, 1]. For example: "I love this" may be represented by 1; "I like this" by 0.5, etc.

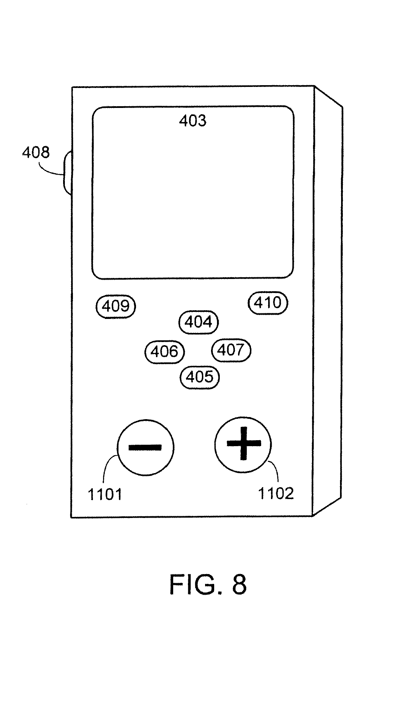

In some examples, as depicted in FIG. 8, two buttons, one 1102 labeled "+", the other 1101 labeled "-", are provided. Different feedback values are associated with the buttons depending on how long each is held down. In some examples, each button has two potential meanings: "quick press-and-release" (held fewer than 750 ms) and "extended hold" (held down 750 ms or longer). An extended hold on the "+" button 1102 means "I love this" and gives a target feedback score of +1.0. Quick press-and-release of the "+" button 1102 means "I like this" and gives a target feedback score of +0.5. Quick press-and-release of the "-" 1101 button means "I dislike this" and gives a target feedback score of -0.5. Extended hold of the "-" button 1101 means "I hate this" and gives a target feedback score of -1.

In some examples, a target score is computed as a continuous function based on the amount of time the + (1102) or - (1101) button is held down.

In some examples, the target feedback score is also influenced by implicit feedback. For example, if the user presses "next track" during a track, the score may be decremented by 0.3. Other forms of implicit feedback are disclosed in the incorporated patent publications.

### "Freshness" indicator:

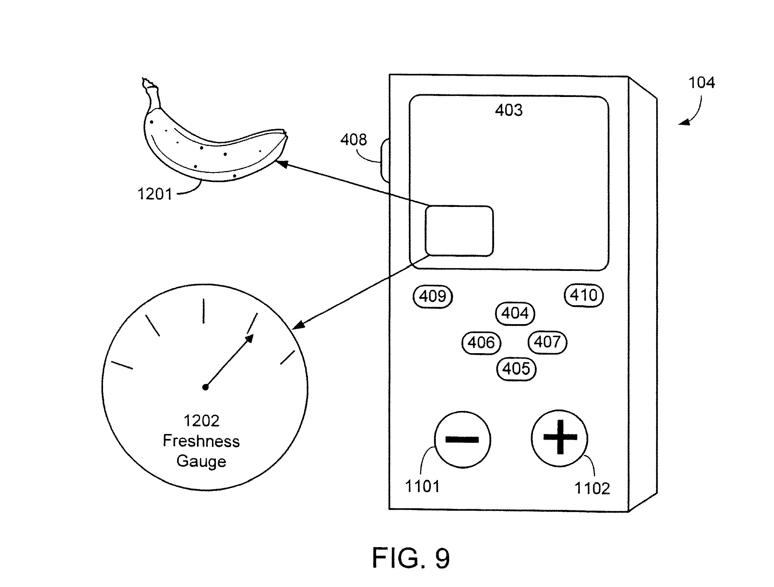

With reference to FIG. 9, in an end-point playback device 104 that holds a limited collection of tracks, or in a hard drive based music collection device that can stream tracks from a networked music delivery service (referencing the tracks, for example, by URL or other address), a graphical indication 1201, 1202 of how much of a category of music (such as those tracks that match the user preferences) remains on the device that has not yet been played can be useful. The indication need not be graphical so long as it can be understood by a person. As this "freshness" indicator 1201, 1202 approaches zero, the user will know that he should update his content by synchronizing the device with a larger collection. In some examples, the freshness indicator is represented by a fuel gauge that gradually empties 1202. In other examples, the freshness indicator is represented by a fruit, such as a banana, that gradually ripens 1201. In these and other examples, the indicator gives the user graphical feedback regarding when he is running out of music he likes but has not heard recently.

As the device learns a user's preferences, the "freshness" value will change, prompting a change in the indicator. If the device discovers that the user does not like some of the music that was predicted to be liked, the "freshness" value will decline more rapidly. Conversely, if the device discovers that the user likes additional types of music that are present on the device 104, the "freshness" indicator will decline more slowly (and could possibly increase). The "freshness" indicator could also be estimated in terms of time, i.e., how many hours or minutes of "fresh" music remains.

In some other examples, the graphical indication 1201, 1202 can be used to represent the amount of music meeting certain characteristic criteria besides "freshness" as described above. This general indicator for representing the amount of music meeting certain music characteristic can also change in response to user feedback with respect to the music content. For example, the characteristics may refer to the type of music a user is likely to prefer listening to in the near future.

### Planar (non-hierarchical) navigation of music library

When selecting a track from multiple tracks to play, conventional hierarchical menu selection requires the user to access multiple menus to switch between navigations paths. For example, in a hierarchical system, a user listening to a track classified as "jazz" must return to a menu of available genres (often by traversing multiple levels of a hierarchy, e.g., through albums and artists) in order to select a track classified as "oldies." In some of the following examples, a user may simply change "stations," in one example by using a single button press, to begin hearing music in a different genre. Stations may also be organized along lines other than genre, such as mood, artist, date, etc.

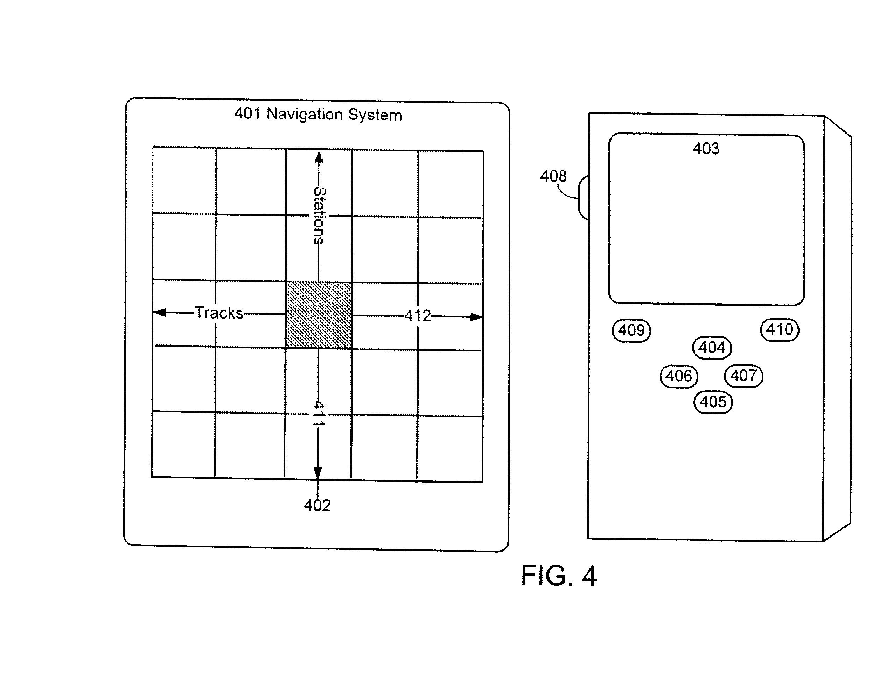

As depicted in FIG. 4, in some examples, a planar (non-hierarchical) music library navigation system 401 organizes and navigates digital music files in a two-dimensional grid 402 without requiring switching back and forth among multiple hierarchical menus. In some implementations, the user interface on an end-point playback device 104 includes a viewport 403, navigation controls (up 404, down 405, left 406, right 407) and other playback controls (volume 408, play 409 and pause 410). Music track files are organized in "stations" that can be grouped by date, genre, user-preference, or other criteria. Within each station are a series of music track files that fit the prescribed criteria.

In these examples, conceptually, the music collection is organized as a two-dimensional grid with "stations" along the y-axis 411 and "tracks" on the x-axis 412. At any given time, a viewport 403 reflects the current x-y position within the grid 402, and the audio playback directly corresponds to the current position. Operating the Up 404 and Down 405 controls on the end-point playback device 104 moves the viewport 403 along the y-axis 411, switching between stations. Left 406 and Right 407 controls move the viewport 403 along the x-axis412, switching between music tracks.

### Music library integration, organization and buffering_

### Integration of real-time music and pre-stored music collection:

In some examples, the music repository includes both streamed music tracks such those from a subscription service and a user's pre-stored/owned music collection. They are seamlessly integrated into a music collection library. In some practices, the seed music tracks as described before are selected from this integrated library.

For integration, in some implementations, the user's collection is parsed and used to create a station spectrum that matches the genres, musical styles, or moods contained in the collection. Music tracks are then added to fill out the stations that include tracks of the listener's collection as well as new music tracks from online delivery that have been referenced according to the user's music tracks. User feedback such as ratings can then be applied to this dataset. In another implementation, the user is presented with his own collection as a point of departure. The collection can be organized by station or genre/sub-genre or other relevant classification. As the user listens to and rates music tracks from his collection, the preference engine searches both the user collection and the online music delivery service to find music tracks that match user tastes to augment the listening experience.

Some example systems utilize a method to allocate dynamically music data to the memory buffer of an end-point playback device 104. Certain implementations of such a method provide a faster response to user input, such as when skipping through tracks or switching between stations. Certain implementations of such a method avoid pauses caused by network traffic when playing streamed tracks.

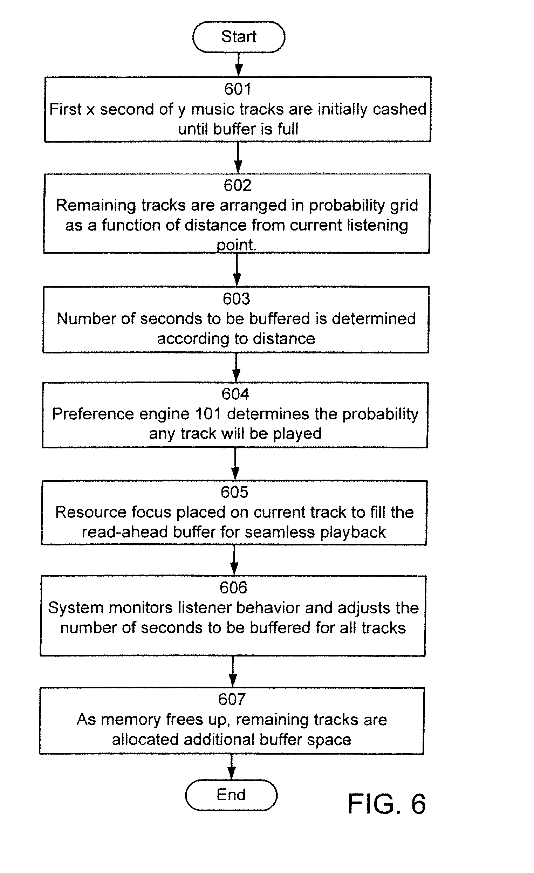

As shown in FIG. 6, one example method operates as follows:
a) The first x seconds of *y* music tracks are initially cached until a buffer is full (step 601). In some examples, *x* is 10 and *y* is 6 (the first 10 seconds of 6 tracks) are cached to fill a one minute buffer rather than filling a one minute buffer with one song that might get skipped.
b) The remaining music tracks are arranged in a probability grid that is a function of their distance from the current listening point (step 602). The number of seconds to be buffered is determined according to this distance (step 603). The probability grid describes the likelihood a song will be played next.
c) The preference engine 101 determines the probability that any given music track will be played (step 604). The preference engine 101 takes into account all sources of feedback, including direct feedback, feedback provided from references to other tracks, and whether the track is part of a station or genre that the user likes or dislikes.
d) The system buffers a given number of seconds for the current track, to ensure seamless playback (step 605). The number of seconds to be buffered is adjusted based on the results returned by the preference engine 101.
e) The system monitors listener behavior and adjusts the number of seconds to be buffered for all tracks (step 606). For example, if a user frequently skips many tracks, fewer seconds per track may be buffered to allow more tracks to be partially buffered.
f) As memory is freed up (by completing, skipping or negatively rating a track), the remaining tracks are allocated additional buffer space (step 607).

The tracks may be from a user's collection, or from online delivery or from an integrated music library.

In some examples, over time, as the track list becomes more accurate to listener preferences, fewer tracks need to be buffered because it is less likely the user will skip a large number of tracks. The buffer is then filled with a mix of partial and complete tracks, allowing repetition of frequently played tracks without loading the server. Moreover, extended listening is provided for even where connectivity to the network is interrupted.

Other embodiments are within the scope of the following claims.

## Claims

1. A method comprising:
calculating a first target score for each track of a plurality of tracks able to be streamed from a server and across a network that reflects a likelihood of a user choosing each track to be the next track to be played;
presenting a first subset of the plurality of tracks to the user based on the first target scores of each track of the first subset to enable the user to choose a track from among the first subset for being played by an endpoint playback device;
caching a first amount of a track of the first subset received across the network from the server in the endpoint playback device;
monitoring an action by the user associated with the next track to be played;
calculating a second target score for each track of the plurality of tracks that reflects a likelihood of a user choosing each track to be the next track to be played in view of the action by the user;
presenting a second subset of the plurality of tracks to the user based on the second target scores of each track of the second subset to enable the user to choose a track from among the second subset for being played by an endpoint playback device, wherein the second subset is smaller than the first subset; and
caching a second amount of a track of the second subset received across the network from the server in the endpoint playback device, wherein the second amount is greater than the first amount.

2. An apparatus comprising a CPU executing a sequence of instructions of a preference engine that causes the CPU to:
calculate a first target score for each track of a plurality of tracks able to be streamed from a server and across a network that reflects a likelihood of a user choosing each track to be the next track to be played;
present a first subset of the plurality of tracks to the user based on the first target scores of each track of the first subset to enable the user to choose a track from among the first subset for being played by an endpoint playback device;
cache a first amount of a track of the first subset received across the network from the server in the endpoint playback device;
monitor an action by the user associated with the next track to be played;
calculate a second target score for each track of the plurality of tracks that reflects a likelihood of a user choosing each track to be the next track to be played in view of the action by the user;
present a second subset of the plurality of tracks to the user based on the second target scores of each track of the second subset to enable the user to choose a track from among the second subset for being played by an endpoint playback device, wherein the second subset is smaller than the first subset; and
cache a second amount of a track of the second subset received across the network from the server in the endpoint playback device, wherein the second amount is greater than the first amount.
